# EUROPEAN PATENT APPLICATION

(11) **EP 4 675 844 A1**
(43) Date of publication of application: **07.01.2026**
(21) Application number: 24763472.8
(22) Date of filing: 30.01.2024
(51) Int. Cl.: H01M 50/591, H01M 50/204, H01M 50/213, H01M 50/227, H01M 50/24, H01M 50/278, H01M 50/284, H01M 50/367, H01M 50/588

(54) **BATTERY PACK AND METHOD FOR MANUFACTURING SAME**

(30) Priority: 28.02.2023 JP 2023030517
(71) Applicant: Panasonic Energy Co., Ltd., Moriguchi-shi, Osaka 570-8511 (JP)
(72) Inventor: FUKUDA, Shinsuke, Osaka 571-0057 (JP)
(74) Representative: Eisenführ Speiser
(86) International application number: PCT/JP2024/002851
(87) International publication number: WO 2024/180987

(57) **Abstract**

Provided is, for example, a battery pack that achieves a thinner size while ensuring a path for discharging gas. A battery pack 100 includes a plurality of secondary battery cells 1, each of which has, at an end face, a gas discharge port that opens in response to an increase in internal pressure, a plurality of lead plates 30, each of which connects the plurality of secondary battery cells 1, and a plurality of battery holders 20, each of which stores the plurality of secondary battery cells 1 and the lead plates 30. The plurality of battery holders 20 are coupled in such an orientation that end faces of adjacent battery holders 20 face each other to form a battery module 2, and a gas discharge space 50 is defined between the end faces, which face each other, of the battery holders 20. Each of the battery holders 20 includes a holder tube 21 that stores the secondary battery cells 1, and a holder lid 24 that closes an end of the holder tube 21. The lead plates 30 are disposed on an inner face of the holder lid 24, and the holder lid 24 is made of a material having higher heat resistance than that of the holder tube 21.

## Description

### TECHNICAL FIELD

The present disclosure relates to a battery pack and a method for manufacturing the battery pack.

### BACKGROUND ART

A battery pack in which a large number of secondary battery cells are connected in series or in parallel is used as a power source for electric assist bicycles, a power supply for portable electric devices such as electric cleaners and electric tools, or as a stationary power storage such as a backup power supply for servers or a power supply device for households, business establishments, and factories, and furthermore, as a power supply for driving vehicles such as electric scooters, electric carts, hybrid vehicles, and electric vehicles, and the like.

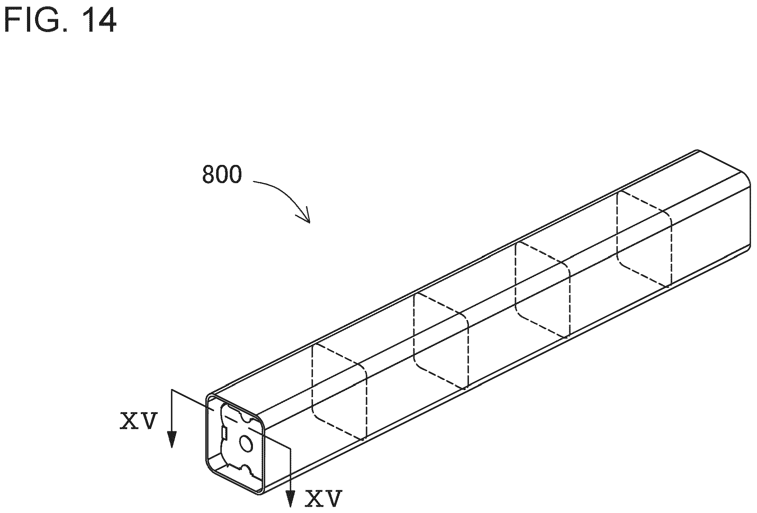

In such a battery pack, as shown in the perspective view of FIG. 14, a large number of cylindrical secondary battery cells are stored in a cell holder and aligned in the longitudinal direction. By inserting the secondary battery cells into the cell holder, partition walls are provided between the secondary battery cells, thereby isolating and insulating adjacent secondary battery cells from each other (e.g., Patent Literature 1).

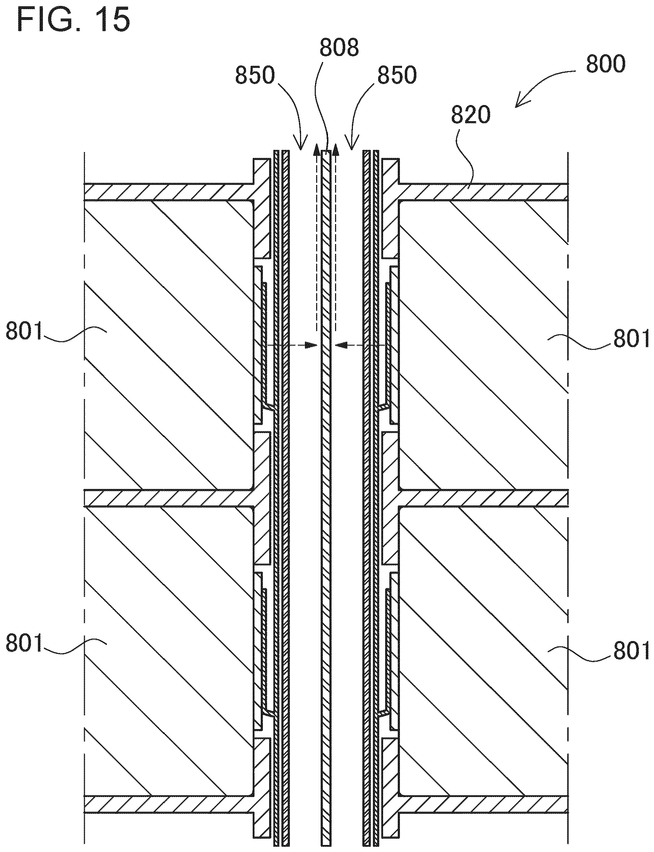

With the recent increase in output power of electrical and motorized devices, higher output and larger capacity are also required for battery packs. As a result, the number of secondary battery cells contained in a battery pack tends to increase. On the other hand, battery packs are also required to be smaller and lighter, which require the secondary battery cells to be arranged in close proximity within the limited space of the battery pack. Each secondary battery cell is provided with a gas discharge port that opens to release internal gas in the event of an abnormality causing an internal pressure increase. The gas discharge port is generally provided on the end face on the positive electrode side of the secondary battery cell. Meanwhile, in a battery pack that stores a large number of secondary battery cells, the volume of internal space is limited as described above. Therefore, the secondary battery cells are required to be arranged in close proximity to each other. Accordingly, as shown in the cross-sectional view of FIG. 15, a fire-resistant wall 808 is disposed at the interface of secondary battery cells 801 that are disposed with their end faces facing each other. In addition, on both sides of the fire-resistant wall 808, discharge ducts 850 are defined to guide high-temperature and high-pressure gases to the outside in case where high-temperature and high-pressure gas is accidentally released from the secondary battery cells 801, which are facing each other.

However, in the above configuration, it is necessary to stack two discharge ducts, which increases the height of the battery pack and results in larger overall dimensions. On the other hand, if the height of the discharge duct is low, in the event that high-temperature and high-pressure gases are discharged, there is a concern that the ability to discharge the high-temperature and high-pressure gases to the outside of the battery pack will decrease, thereby decreasing safety. Thus, ensuring safety and achieving a thinner battery pack are conflicting requirements, and it has been difficult to achieve both.

### CITATION LIST

### PATENT LITERATURE

Patent Literature 1: WO2019/208217

### SUMMARY OF INVENTION

### TECHNICAL PROBLEM

One object of the present disclosure is to provide a battery pack made thinner while still ensuring a path for discharging gas, as well as a method for manufacturing such a battery pack.

### SOLUTION TO PROBLEM

In order to achieve the above object, a battery pack according to one embodiment of the present disclosure includes a plurality of secondary battery cells, each of which has, at an end face, a gas discharge port that opens in response to an increase in internal pressure, a plurality of lead plates, each of which connects the plurality of secondary battery cells, and a plurality of battery holders, each of which stores the plurality of secondary battery cells and the lead plates. The plurality of battery holders are coupled in such an orientation that end faces of adjacent battery holders face each other to form a battery module. A gas discharge space is defined between the end faces, which face each other, of the battery holders. Each of the battery holders includes a holder tube that stores the secondary battery cells, and at least one holder lid that closes an end of the holder tube. The lead plates are disposed on an inner face of the holder lid.

A battery pack according to another embodiment includes a plurality of secondary battery cells, each of which has, at an end face, a gas discharge port that opens in response to an increase in internal pressure, a plurality of lead plates, each of which connects the plurality of secondary battery cells, and a plurality of battery holders, each of which stores the plurality of secondary battery cells and the lead plates. The plurality of battery holders are coupled in such an orientation that end faces of adjacent battery holders face each other to form a battery module. A gas discharge space is defined between the end faces, which face each other, of the battery holders. Each of the battery holders includes a holder tube that stores the secondary battery cells, and at least one holder lid that closes an end of the holder tube. The holder lid is made of a material having higher heat resistance than that of the holder tube.

A method for manufacturing a battery pack according to another embodiment is a method for manufacturing a battery pack including a plurality of secondary battery cells, each of which has, at an end face, a gas discharge port that opens in response to an increase in internal pressure, a plurality of lead plates, each of which connects the plurality of secondary battery cells, and a plurality of battery holders, each of which stores the plurality of secondary battery cells and the lead plates. The method includes a step of disposing each of the lead plates on an inner face of a holder lid, which is configured to close an end of a holder tube of each of the battery holders and is made of a material having higher heat resistance than heat resistance of the holder tube, a step of storing the secondary battery cells in the holder tube in which each of the lead plates is disposed in such a manner that end faces of the secondary battery cells are mated with the holder lid, a step of welding each of the lead plates to the end faces of the secondary battery cells via through-ports opened in the holder tube, a step of closing the through-ports with a closing unit, and a step of connecting the plurality of battery holders in an orientation such that end faces of adjacent battery holders face each other to form a battery module, and defining a gas discharge space between the end faces, which face each other, of the battery holders.

### ADVANTAGEOUS EFFECTS OF INVENTION

A battery pack according to one embodiment of the present disclosure makes it possible to provide an advantage in that it is not necessary to attach an insulation paper to cover the exposed surface of the lead plate.

Also, a battery pack according to another embodiment achieves miniaturization of the battery pack by sharing a gas discharge space between end faces of adjacent battery holders, as well as omission of fire-resistant wall that has been necessary for separating the gas discharge space, thereby reducing the number of components and achieving cost reduction.

Furthermore, a method for manufacturing a battery pack according to another embodiment makes it possible to close a through-port with a closing unit, which enables provision of a relatively large through-port, thereby improving the workability of the step of welding the lead plate to end faces of the secondary battery cell, which is performed through the through-ports.

### BRIEF DESCRIPTION OF DRAWINGS

FIG. 1 is a perspective view of a battery pack according to Embodiment 1;
FIG. 2 is an exploded perspective view of the battery pack of FIG. 1;
FIG. 3 is a perspective view of a battery block of FIG. 1;
FIG. 4 is an exploded perspective view of the battery block of FIG. 3;
FIG. 5 is an exploded perspective view of a state in which lead plates are detached from the holder lids of FIG. 4;
FIG. 6 is an enlarged perspective view of the holder lid and the lead plates of FIG. 5;
FIG. 7 is an exploded perspective view of a battery block according to Comparative Example 1;
FIG. 8 is a schematic enlarged cross-sectional view of the battery block according to Comparative Example 1;
FIG. 9 is a schematic enlarged cross-sectional view of a battery block according to Embodiment 1;
FIG. 10 is a schematic cross-sectional view of a battery pack according to Comparative Example 2;
FIG. 11 is a side view of the battery pack of FIG. 1;
FIG. 12 is an exploded perspective view of a battery block according to Modification Example 1;
FIG. 13 is an enlarged cross-sectional view of a main portion showing the region surrounded by the dashed line in the battery pack of FIG. 11;
FIG. 14 is a perspective view of a battery pack according to Comparative Example 3;
FIG. 15 is an enlarged cross-sectional view showing an interface between secondary battery cells adjacent in the longitudinal direction in the battery pack of FIG. 14;
FIG. 16 is a side view of a battery pack according to Modification Example 2;
FIG. 17 is a schematic enlarged cross-sectional view of the battery pack according to Embodiment 1;
FIG. 18 is a schematic cross-sectional view of a battery pack according to Modification Example 3;
FIG. 19 is a schematic cross-sectional view of a battery pack according to Modification Example 4;
FIG. 20 is a schematic enlarged cross-sectional view of a battery pack according to Comparative Example 4;
FIG. 21 is a schematic enlarged cross-sectional view of the battery pack according to Embodiment 1;
FIG. 22 is an exploded perspective view of a battery block of a battery pack according to Embodiment 2;
FIG. 23 is an exploded perspective view of a state in which lead plates are detached from the holder lids of FIG. 22;
FIG. 24 is an enlarged perspective view of the holder lid and the lead plates of FIG. 23; and
FIG. 25 is a schematic diagram showing paths of gas released in the holder lid of FIG. 24.

### DESCRIPTION OF EMBODIMENTS

The embodiments of the present disclosure may be specified by the following configurations and features.

A battery pack according to another embodiment of the present disclosure is as recited in any preceding embodiments, wherein the holder lid may be made of a material having higher heat resistance than that of the holder tube. This configuration achieves miniaturization of the battery pack by sharing a gas discharge space between end faces of adjacent battery holders, as well as omission of fire-resistant wall that has been necessary for separating the gas discharge space, thereby reducing the number of components and achieving cost reduction.

A battery pack according to another embodiment of the present disclosure is as recited in any preceding embodiments, wherein the lead plates may be disposed on an inner face of the holder lid. This configuration provides advantages including elimination of the need to attach an insulation paper to cover the exposed surfaces of the lead plates.

A battery pack according to another embodiment of the present disclosure is as recited in any preceding embodiments, wherein the holder tube may hold the secondary battery cells so that one secondary battery cell is held in the longitudinal direction. With this configuration, the secondary battery cells are not coupled along the longitudinal direction, and the end face of each secondary battery cell is unfailingly covered by the holder lid, allowing the holder lid to be disposed at a gas discharge port to enhance safety.

A battery pack according to still another embodiment of the present disclosure is as recited in any preceding embodiments, wherein the battery holder may not have an additional lead plate for electrical connection with another adjacent battery holder between the battery holder and the another adjacent battery holder. This configuration allows easier definition of a gas discharge space between end faces of adjacent battery holders.

A battery pack according to still another embodiment of the present disclosure is as recited in any preceding embodiments, wherein the holder lid may include a thin-walled region that is partially thinned on a surface facing a holder lid of another adjacent battery holder. With this configuration, if an abnormality occurs in a secondary battery cell and high-temperature and high-pressure gas is released from the gas discharge port, the rupture is more likely to occur in the thin-walled region, thereby facilitating the definition of the region through which the gas is released in advance.

A battery pack according to still another embodiment of the present disclosure is as recited in any preceding embodiments, wherein the holder lid may have an outer face that is a continuous flat plane, and an inner face, which faces end faces of the secondary battery cells, of the holder lid may be partially recessed to form the thin-walled region. With this configuration, compared to a configuration in which the outer face of the holder lid is recessed, the recessed inner face allows for a greater distance between the holder lid and the end faces of the secondary battery cells, thereby reducing the influences of the gas. In addition, by forming the outer face of the holder lid as a continuous flat plane, the high-temperature and high-pressure gas discharged from the battery holder can be discharged smoothly along the gas discharge space, as compared to the configuration in which a partial recess is provided on the outer face of the holder lid.

A battery pack according to still another embodiment of the present disclosure is as recited in any preceding embodiments, wherein the holder lid includes a lid flange around the inner face. With this configuration, even if high-temperature and high-pressure gas is ejected from an end face of a secondary battery cell, the lid flange of the holder lid having flame resistance can prevent the spread of fire in the lateral direction.

A battery pack according to still another embodiment of the present disclosure is as recited in any preceding embodiments, wherein the lid flange has a height of not less than 1 mm.

A battery pack according to still another embodiment of the present disclosure is as recited in any preceding embodiments, wherein the holder lid may include a plurality of through-ports on a surface facing a holder lid of another adjacent battery holder. This configuration makes it possible to dispose the lead plates on the inner face of the holder lid and weld the secondary battery cells to the lead plates by inserting an electrode rod or the like through the through-ports opened in the holder lid.

A battery pack according to still another embodiment of the present disclosure is as recited in any preceding embodiments, wherein the respective through-ports in the holder lid may be formed at positions offset from each other on the surface facing a holder lid of another adjacent battery holder. With this configuration, even if high-temperature and high-pressure gas is ejected from one of the secondary battery cells having opposing end faces, the through-ports of the opposing holder lids are not in communication with each other, thereby preventing the high-temperature and high-pressure gas from being directly emitted onto the end face of adjacent secondary battery cell through the through-ports.

A battery pack according to still another embodiment of the present disclosure is as recited in any preceding embodiments, wherein the through-ports have a size of not more than φ4 mm.

A battery pack according to still another embodiment of the present disclosure is as recited in any preceding embodiments, wherein a closing unit that closes the through-ports may be further included. This configuration makes it possible to close the through-ports with the closing unit, which enables provision of a relatively large through-ports, thereby improving the workability of the step of welding the lead plates to end faces of the secondary battery cells, which is performed through the through-ports.

A battery pack according to still another embodiment of the present disclosure is as recited in any preceding embodiments, wherein the holder tube may be made of a thermoplastic resin.

A battery pack according to still another embodiment of the present disclosure is as recited in any preceding embodiments, wherein the holder lid may be made of a thermosetting resin.

A battery pack according to still another embodiment of the present disclosure is as recited in any preceding embodiments, wherein the holder tube may be made of at least one of polycarbonate, polypropylene, polybutylene terephthalate, modified polyphenylene ether, ABS, and PPS.

A battery pack according to still another embodiment of the present disclosure is as recited in any preceding embodiments, wherein the holder lid may be made of at least one of unsaturated polyester, unsaturated phenolic resin, glass epoxy resin, silicone resin, mica, ceramic, a mixed material of these powder resins, or a metal plate with insulation treatment.

A battery pack according to still another embodiment of the present disclosure is as recited in any preceding embodiments, further comprising a circuit board connected to the battery module. Each of the lead plates includes a lead connection piece at an edge, and the battery module is configured such that the lead connection piece of each of the lead plates fixed to an end face of each of the battery holders is exposed from one surface of the battery module and connected to the circuit board. With this configuration, since the electrical connection between the respective battery holders is made via the circuit board instead of directly by the lead plates, it is possible to define a gas discharge space in the region where the battery holders face each other.

A battery pack according to still another embodiment of the present disclosure is as recited in any preceding embodiments, wherein each of the battery holders holds, among the plurality of secondary battery cells, a first battery cell and a second battery cell in parallel with each other in an orientation such that end faces of the first battery cell and the second battery cell are flush with each other, each of the lead plates disposed on an inner face of the holder lid connects the end faces of the first battery cell and the second battery cell. Each of the lead plates includes a first lead connection face connected to the end face of the first battery cell, a second lead connection face connected to the end face of the second battery cell, and a first lead connection part that connects the first lead connection face and the second lead connection face. The holder lid includes a first lid region that faces the end face of the first battery cell, a second lid region that faces the end face of the second battery cell, and a partition plate provided between the first lid region and the second lid region. The first lead connection part may extend in a mountain shape along the partition plate. With this configuration, the end faces of the secondary battery cells are connected with the lead plates while a partition plate is provided between the adjacent end faces. This provides such an advantage that, even if high-temperature and high-pressure gas is released from the end face of a secondary battery cell, the influences of the high-temperature and high-pressure gas on another secondary battery cell adjacent on the side face can be suppressed.

A battery pack according to still another embodiment of the present disclosure is as recited in any preceding embodiments, wherein each of the battery holders holds, among the plurality of secondary battery cells, a first battery cell and a second battery cell in parallel with each other in an orientation such that end faces of the first battery cell and the second battery cell are flush with each other, and each of the lead plates disposed on an inner face of the holder lid connects the end faces of the first battery cell and the second battery cell. Each of the lead plates includes a first lead connection face connected to the end face of the first battery cell, a second lead connection face connected to the end face of the second battery cell, and a first lead connection part that connects the first lead connection face and the second lead connection face. The holder lid includes a first lid region that faces the end face of the first battery cell, a second lid region that faces the end face of the second battery cell, and a partition plate provided between the first lid region and the second lid region. The first lead connection part is provided at a position offset from a line connecting centers of the first lead connection face and the second lead connection face.

A battery pack according to still another embodiment of the present disclosure is as recited in any preceding embodiments, wherein the first lead connection part may be branched into the left and right of the partition plate.

Embodiments of the present disclosure are described below with reference to the drawings. However, the embodiments shown below are only examples to embody the technical concepts of the present disclosure, and the present invention is not limited to these embodiments. Further, this specification does not limit any member in the claims to the members described in these embodiments. In particular, unless otherwise specified, the dimensions, materials, shapes, relative positions, etc. of the components described in these embodiments are intended to be merely illustrative and not to limit the scope of the present disclosure. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present invention may be implemented such that a plurality of elements are formed from the same member, allowing a single member to serve as a plurality of elements, or that, conversely, the function of a single member is shared among a plurality of members.

The battery pack of the present disclosure may be used as a power supply for portable electric devices such as electric cleaners and electric tools, or as a stationary power storage such as a backup power supply for servers or a power supply device for households, business establishments, and factories, and furthermore, as a power source for driving electric assist bicycles, a power supply for driving vehicles such as electric scooters, electric carts, hybrid vehicles, and electric vehicles, and the like. A battery pack for use in an electric assist bicycle is described below as one embodiment of the present disclosure.

### [EMBODIMENT 1]

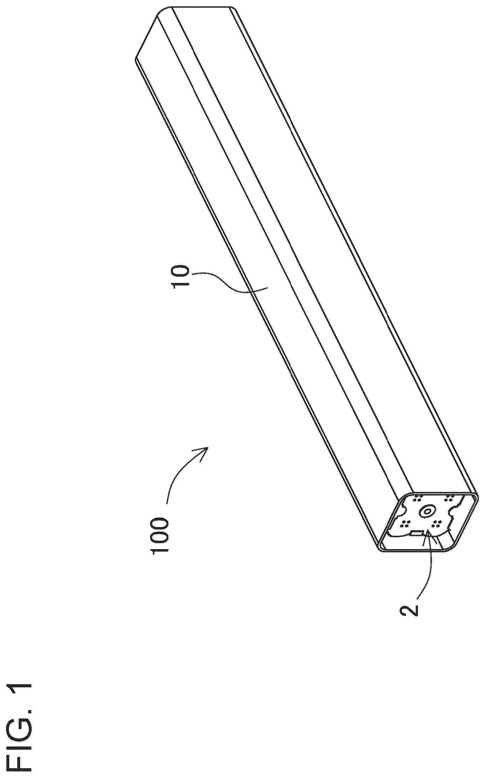

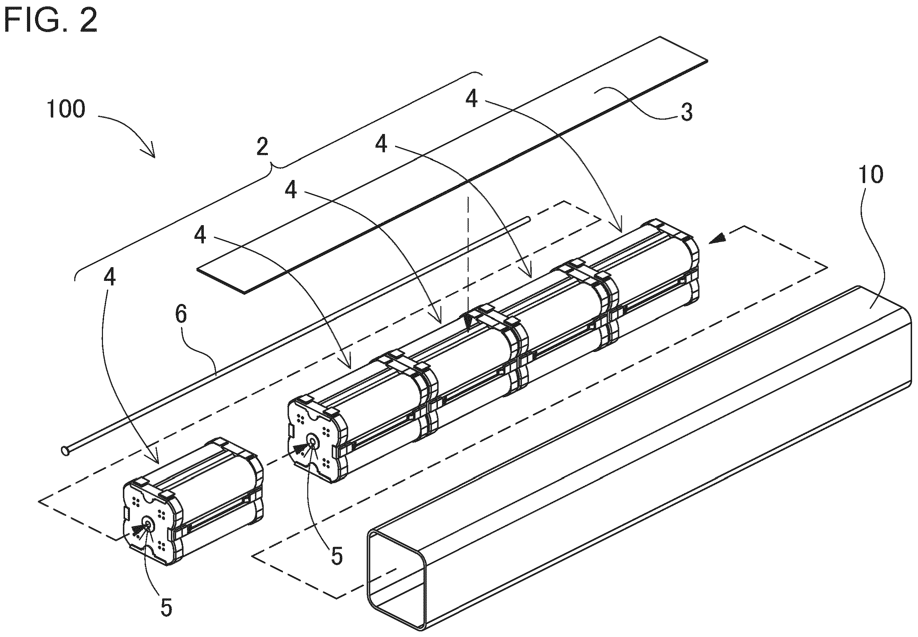

FIGs. 1 to 2 illustrate a battery pack 100 according to Embodiment 1 of the present disclosure. In these drawings, FIG. 1 shows a perspective view of the battery pack 100 according to Embodiment 1, and FIG. 2 shows an exploded perspective view of the battery pack 100 of FIG. 1, respectively. The battery pack 100 shown in these drawings includes a housing 10, a battery module 2 stored in the housing 10, and a circuit board 3.

### (Housing 10)

The housing 10 has a rod-like outer shape that is elongated in the longitudinal direction of the secondary battery cell 1. Further, the housing 10 is formed in a tubular shape with a hollow interior, which serves as a storage space in which the battery module 2 is housed. The tubular outer shape of the housing 10 is designed in accordance with the shape of the battery module 2 stored in the internal storage space. Such a housing 10 can be formed, for example, from polycarbonate, ABS, or similar resin molded products, or from an aluminum extrusion molded product.

### (Battery Module 2)

The battery module 2 is configured by connecting a plurality of battery blocks 4. Each of the battery blocks 4 has a connection port 5 opened through its center along the longitudinal direction. The plurality of battery blocks 4 are connected and secured in the longitudinal direction by inserting a shaft 6 through the connection ports 5. In the example of FIG. 2, the battery module 2 is configured by connecting five battery blocks 4. However, needless to say, the number of battery blocks is not limited to this example and four or fewer, or six or more battery blocks may be connected. Further, the battery blocks 4 are electrically connected via the circuit board 3.

### (Circuit Board 3)

The battery module 2 is connected to the circuit board 3 via a lead plate 30. The circuit board 3 includes a charging/discharging circuit that performs charging and discharging of the secondary battery cells 1, a protection circuit that monitors the voltage and temperature of the secondary battery cells 1 and shuts off the current if abnormality occurs, and the like. The circuit board 3 is made of a glass epoxy substrate or a similar substrate. Further, if necessary, a board holder for storing the circuit board may be provided, and the board holder may be secured to the battery module. Such a board holder is made of an insulating material such as a resin.

### (Battery Block 4)

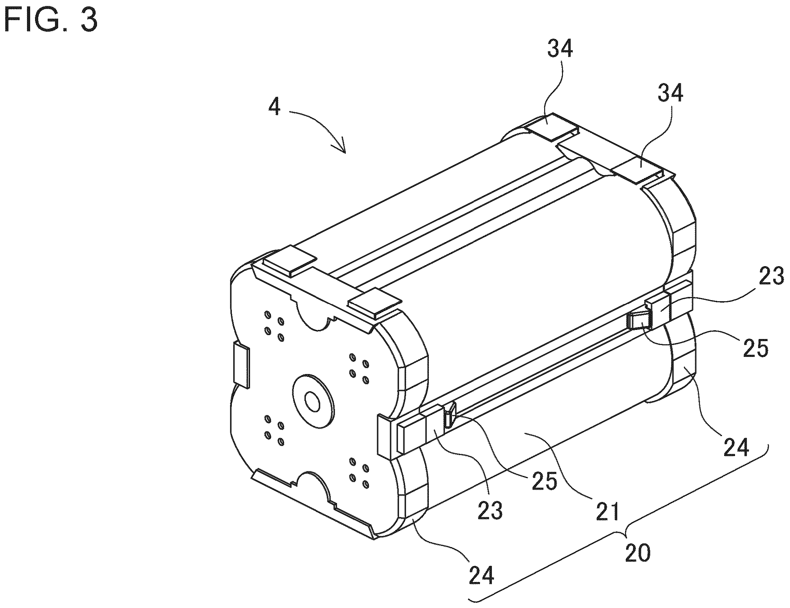

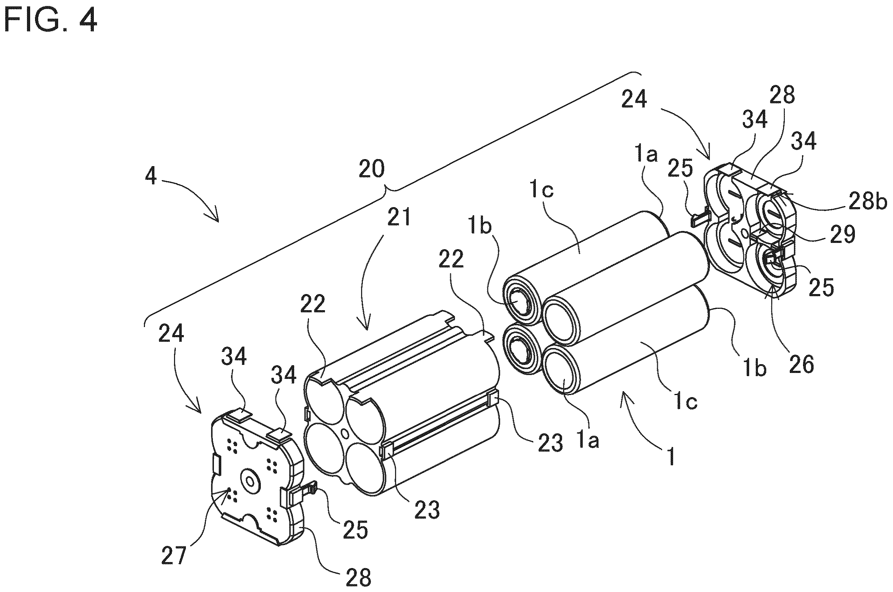

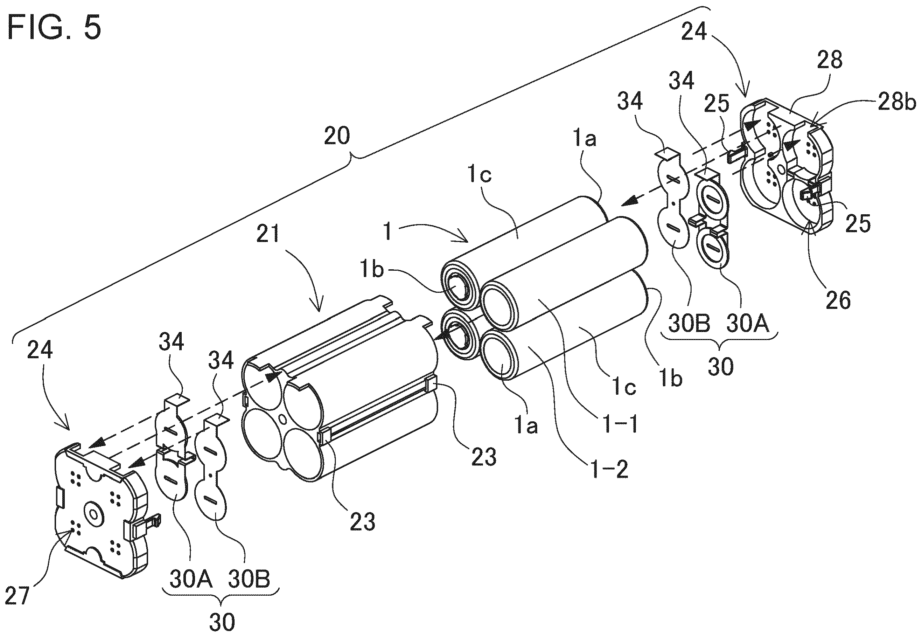

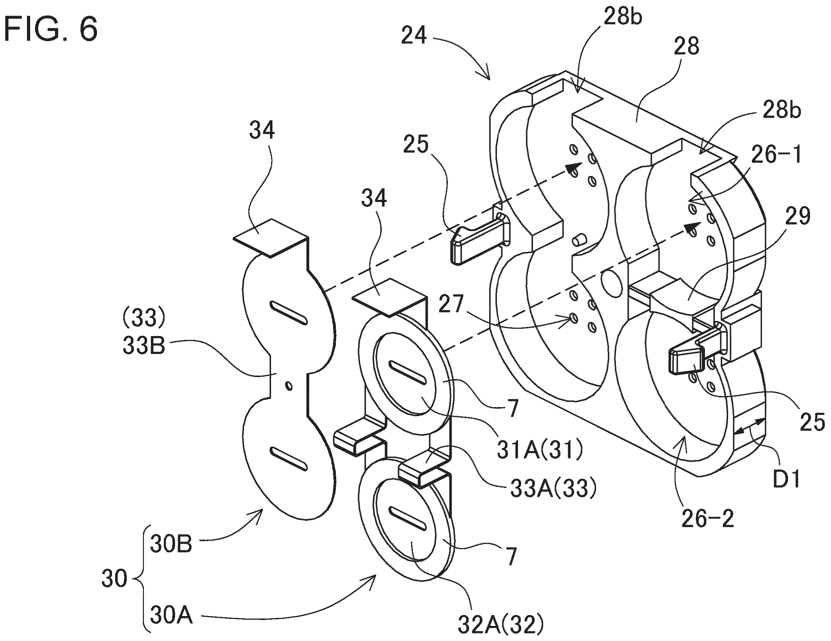

The battery module 2 is divided into a plurality of battery blocks 4, and each of the battery blocks 4 stores the secondary battery cells 1. Each of the battery blocks 4 is shown in FIGs. 3 to 6. In these drawings, FIG. 3 shows a perspective view of the battery block 4 of FIG. 1, FIG. 4 shows an exploded perspective view of the battery block 4 of FIG. 3, FIG. 5 shows an exploded perspective view of a state in which the lead plates 30 are detached from holder lids 24 of FIG. 4, and FIG. 6 shows an enlarged perspective view of the holder lid 24 and the lead plate 30 of FIG. 5, respectively.

The outer shape of the battery block 4 is designed according to the shape and the number of the secondary battery cells 1 to be stored therein, as shown in FIG. 3. In this example, four cylindrical secondary battery cells 1 are held in a matrix arrangement, with two cells in parallel stacked in two layers. However, needless to say, the shape, number, and stacking configuration of the secondary battery cells held in each battery block can be arbitrarily designed. Each of the battery blocks 4 includes a plurality of the secondary battery cells 1, the lead plates 30 that connect the secondary battery cells 1, and a battery holder 20 that holds these components.

### (Battery Holder 20)

Each of the battery holder 20 includes a holder tube 21 and a pair of holder lids 24, as shown in the exploded perspective views of FIGs. 4 and 5.

### (Holder Tube 21)

The holder tube 21 is formed in a tubular shape to store a plurality of the secondary battery cells 1. The holder tube 21 isolates and partitions each of the secondary battery cells 1. In the examples of FIG. 4, etc., the holder tube 21 is formed into a block in which four holder tubes 21 are coupled in a matrix arrangement when viewed from a cross section so as to hold the four secondary battery cells 1 in a stacked configuration with two rows and two columns.

Further, each holder tube 21 holds the secondary battery cells 1 so that its longitudinal direction has one secondary battery cell 1. With this configuration, the secondary battery cells 1 are not coupled along the longitudinal direction, and the end face of each secondary battery cell 1 is unfailingly covered by the holder lid 24, allowing the holder lid 24 to be disposed at the gas discharge port to enhance safety.

Further, as shown in FIGs. 3 to 5, the holder tube 21 may include a guide piece 22 that positions the joint surface with the holder lid 24.

### (Holder Lid 24)

The end faces on both sides of the cylindrical holder tube 21 are open, and each open end face is closed by one of the pair of holder lids 24. In the examples of FIGs. 4 to 6, the holder lid 24 is formed into a chamfered square shape corresponding to the end faces of the holder tube 21 configured with two rows and two columns. Any known coupling structures, such as locking, screwing, or bonding can be appropriately used to couple the holder lid 24 to the holder tube 21. In the examples of FIG. 4, etc., a holder claw 25 is provided on each of two opposing sides (left and right in the figure) of the holder lid 24 while protruding toward the holder tube 21. The holder tube 21 also includes, at positions corresponding to the holder claws 25, holder receivers 23 that engage with the holder claws 25. The battery holder 20 having this configuration allows the holder claws 25 provided on both sides, i.e., the left and right sides of the holder lid 24 to be engaged respectively with the holder receivers 23 of the holder tube 21. These holder claws 25 and the holder receivers 23 are provided in the valleys between the secondary battery cells 1 stacked in a matrix arrangement. This configuration avoids a situation where the holder claws 25 and the holder receivers 23 protrude from the battery holder 20, keeping the battery holder 20 compact. Alternatively or additionally, the holder claws 25 and the holder receivers 23 may be provided on the upper and lower sides of the holder lid or the holder tube, respectively.

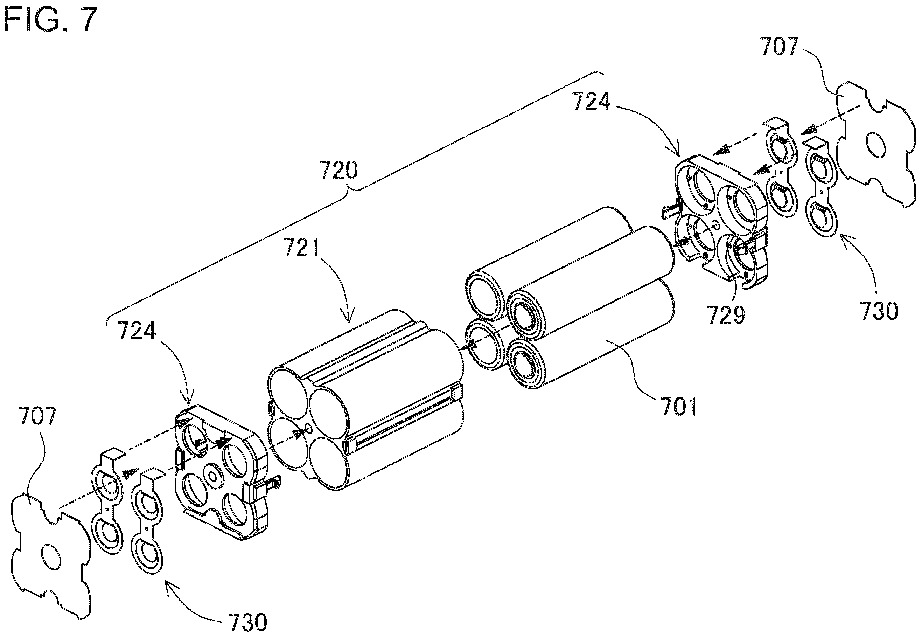

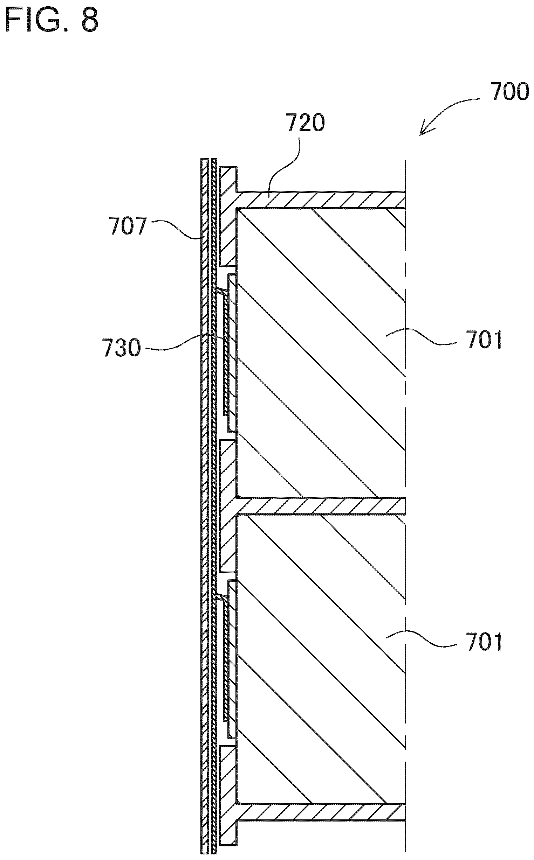

Further, the inner face of the holder lid 24 includes a lid region 26 that faces an end face of the secondary battery cell 1. Further, the lead plates 30 are disposed on the inner face of the holder lid 24. This provides advantages including elimination of the need to attach an insulation paper to cover the exposed surfaces of the lead plates 30. As in the battery block of a battery pack 700 according to Comparative Example 1 shown in the exploded perspective view of FIG. 7 and the cross-sectional view of FIG. 8, in order to join secondary battery cells 701 stored in a holder tube 721 and a pair of holder lids 724 of a battery holder 720 with lead plates 730, a configuration may be considered in which an opening window is formed in the end face of the battery holder 720 that faces the positive electrode side of the secondary battery cell 701 provided with a gas discharge port. During assembly of a battery pack, after inserting the secondary battery cells 701 into the battery holder 720, the lead plates 730 are disposed outside the battery holder 720, and the secondary battery cells 701 are welded thereto. In this state, since the secondary battery cells 701 are exposed from the battery holder 720, an insulation paper 707 is attached to the surface of the lead plates 730 to ensure insulation. In addition, if high-temperature and high-pressure gas is accidentally ejected from an end face of an adjacent secondary battery cell 701, there is a possibility that the gas may, for example, rebound and adversely affect surrounding secondary battery cells 701. Therefore, to protect the secondary battery cells 701 from such high-temperature and high-pressure gas, the insulation paper 707 needs to be made of a material having heat resistance and flame resistance. This poses a risk that the cost of the insulation paper would increase. Moreover, if the exposed area of the secondary battery cell is large, the size of the insulation paper increases, which further contributes to cost rise. In addition, since insulation papers with heat resistance and flame resistance tend to be thicker, there was also a problem that the thickness of the battery holder 720 increases by the thickness of the insulation paper 707, which hinders desired miniaturization.

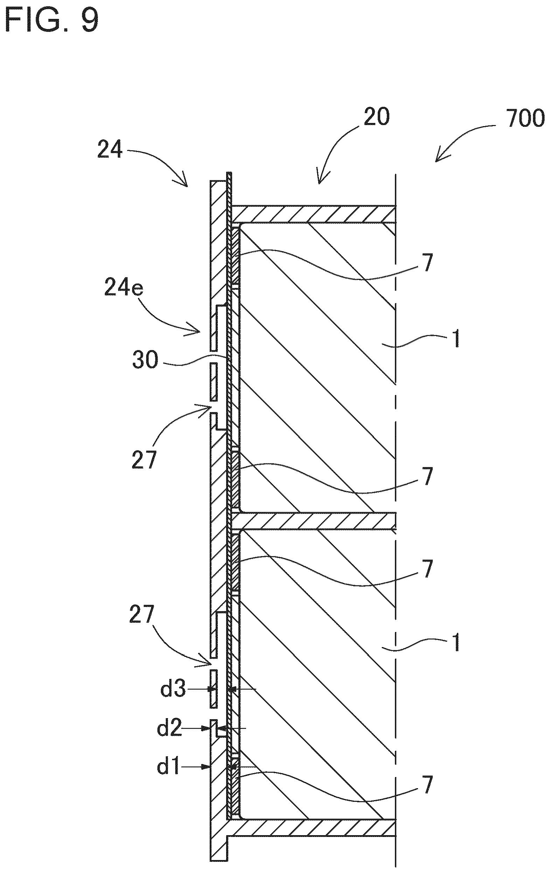

In contrast, in the battery block of the battery pack 100 according to Embodiment 1, as shown in the enlarged cross-sectional view of FIG. 9, a part or all of the lead plate 30 is stored inside the battery holder 20, specifically, in this example, on the inner face side of the holder lid 24, between the end faces of adjacent secondary battery cells 1. With such a configuration, it becomes unnecessary to attach an insulation paper to cover the exposed surface of the lead plate 30. As a result, it is possible to avoid an increase in size due to the thickness of the insulation paper and thereby contribute to size reduction. Further, in the example of FIG. 9, although an annular insulation ring 7 is added instead of the insulation paper to insulate the shoulder of the secondary battery cell 1 from the lead plate 30, it can be smaller in size compared to the insulation paper 707 shown in FIG. 8. Also, since the insulation ring 7 does not need to be made of a heat-resistant or flame-resistant material, using such an insulation ring can contribute to reducing component costs and achieving a thinner design.

### (Thin-walled Region 24e)

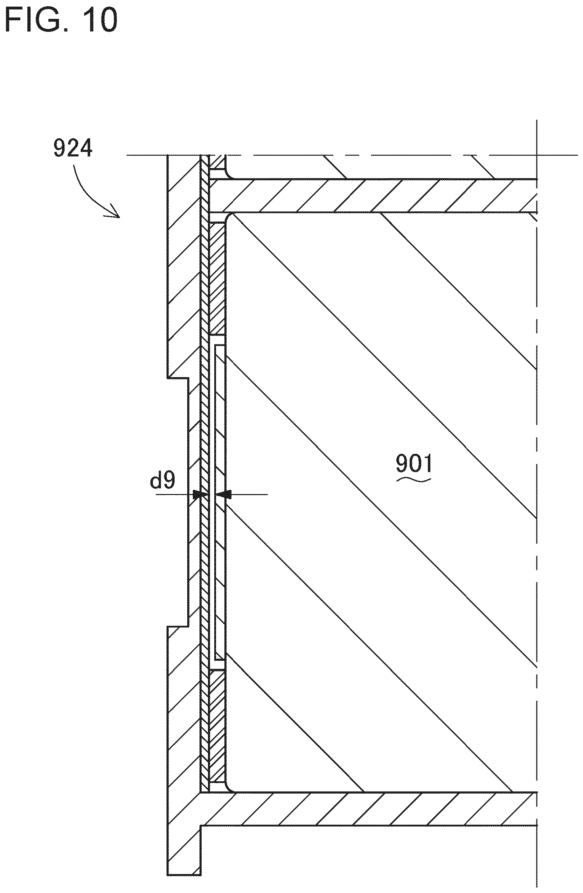

It is also preferable to provide a thin-walled region 24e by forming the holder lid 24 partially thin. The thin-walled region 24e is preferably formed by recessing the inner face of the holder lid 24. In the example of FIG. 9, the thin-walled region 24e is formed by partially recessing the face on the inner side of the holder lid 24, which faces the end face of the secondary battery cell 1, while forming the outer face of the holder lid 24 as a continuous flat plane. With such a configuration, the thin-walled region 24e having a thickness d2, which is thinner than a thickness d1 of the holder lid 24, can be formed, while also creating a gap having a thickness d3 on the inner face side of the holder lid 24. As a result, a sufficient distance can be secured between the holder lid 24 and the end face of the secondary battery cell 1, thereby reducing the influences of gas released from the secondary battery cell 1. In other words, as in the battery pack according to Comparative Example 2 shown in FIG. 10, when the outer face of a holder lid 924 is recessed, a distance d9 between a holder lid 924 and a secondary battery cell 901 is small, exposing it more directly to gas pressure. However, as shown in FIG. 9, by forming the gap d3 to increase the distance, the pressure can be slightly reduced. In addition, by forming the outer face of the holder lid 24 as a continuous flat plane, the high-temperature and high-pressure gas discharged from the battery holder 20 can be discharged smoothly along the gas discharge space, as compared to the configuration in which a partial recess is provided on the outer face of the holder lid 924, as shown in FIG. 10. In addition, since such a high-temperature and high-pressure gas contains a large amount of combustion fine particles coming from inside the cell, there is also an advantage in preventing an event that the combustion fine particles accumulate in the partial recess on the outer face of the holder lid 924, causing that portion to thermally melt and allowing combustion ejecta and high-temperature gas to flow in.

### (Material of Battery Holder 20)

The holder tube 21 and the holder lid 24 that constitute the battery holder 20 are made of a material having excellent insulating properties. Further, the holder lid 24 is made of a material having higher heat resistance than that of the holder tube 21. Thus, instead of forming the entire battery holder 20 from a highly heat-resistant material, only the holder lid 24, which is exposed to high temperatures if the secondary battery cell ignites, has enhanced heat resistance. This allows necessary materials to be effectively placed in critical areas, thereby reducing material costs.

Preferably, the holder tube 21 is made of a thermoplastic resin. Specifically, the holder tube 21 is made of at least one of polycarbonate, polypropylene, polybutylene terephthalate, modified polyphenylene ether, ABS, and PPS.

The holder lid 24, on the other hand, is preferably made of a thermosetting resin. Specifically, the holder lid 24 is made of at least one of unsaturated polyester, unsaturated phenolic resin, glass epoxy resin, and silicone resin. The holder lid 24 may also be made of mica or ceramic (glass, silica, alumina, etc.). In addition, the holder lid 24 may be made of a mixed material of these powder resins, or, for example, a metal plate with insulation treatment.

### (Secondary Battery Cell 1)

The secondary battery cell 1 includes a first cell end face 1a and a second cell end face 1b that are opposite to each other, and a cell side face 1c that connects the first cell end face 1a and the second cell end face 1b. In the examples of FIG. 4, etc., each of the secondary battery cells 1 is a cylindrical secondary battery cell having a cylindrical outer can. The cylindrical secondary battery cell has terminal faces on both end faces. One of the terminal faces is provided with a gas discharge port. The gas discharge port is a member that opens when the internal pressure of the outer can increase, allowing the internal gas to be released. Such a gas discharge port may be a safety valve or a sealing body with a slit for providing an open end. Although the gas discharge port is generally provided on the positive electrode side, the present invention is not limited to this arrangement, and the gas discharge port may be provided at another position, such as on the negative electrode side.

Cylindrical lithium-ion secondary batteries are suitable for the above-described secondary battery cell 1. However, for the battery pack of the present disclosure, the secondary battery cell is not limited to a cylindrical battery and also not limited to a lithium-ion secondary battery. Any rechargeable battery can be used as the secondary battery cell, including, for example, nickel-metal hydride batteries and nickel-cadmium batteries.

### (Lead Plate 30)

The lead plate 30 connects a plurality of the secondary battery cells 1 stored in the battery holder 20 in series or in parallel. Each of the lead plates 30 shown in FIG. 6 includes lead connection faces 31 and 32 connected to the end faces of the secondary battery cells 1, and a lead connection part 33 that connects the lead connection faces 31 and 32 to each other. Here, the lead plate 30 has two types: a first lead plate 30A that connects positive electrodes of the secondary battery cells 1, and a second lead plate 30B that connects negative electrodes of the secondary battery cell 1. The first lead plate 30A includes a first lead connection face 31A, a second lead connection face 32A, and a first lead connection part 33A that connects the first lead connection face 31A and the second lead connection face 32A. The first lead connection part 33A of the first lead plate 30A is bent in a mountain shape. On the other hand, the second lead connection part 33B of the second lead plate 30B is formed as a flat plate, as in the first lead connection face 31A and the second lead connection face 32A.

Each of the lead plates 30 is made of a metal plate such as nickel that has excellent electrical conductivity. In the example of FIG. 4, two secondary battery cells 1 connected in parallel are connected in series in two stages (2 in series × 2 in parallel). The number of secondary battery cells connected in series or in parallel is not limited to this example and is appropriately designed according to the specifications required for the battery pack.

### (Lead Connection Piece 34)

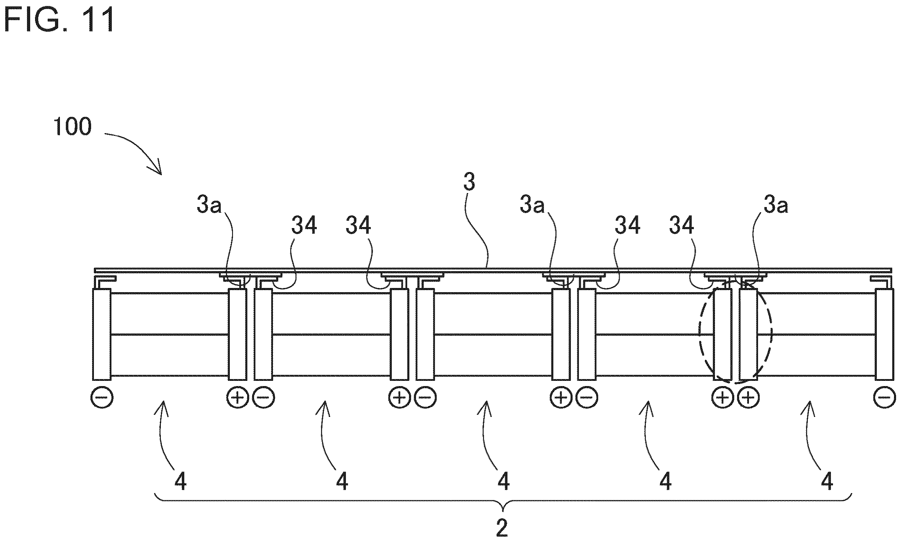

Each of the lead plates 30 also includes a lead connection piece 34 at its edge. In the example of FIG. 6, the lead connection piece 34 protruding from the upper end of the first lead connection face 31A is bent toward the cell side face 1c of the secondary battery cell 1. As shown in FIG. 11, the battery module 2 is configured such that the lead connection pieces 34 of the lead plates 30 fixed to the end faces of the respective battery holders 20 are exposed from one surface of the battery module 2 and connected to a connection region 3a of the circuit board 3. With this configuration, since the electrical connection between the respective battery holders 20 is made via the circuit board 3 instead of directly by the lead plates 30, the lead plates can be removed from the region where the end faces of the battery holders 20 face each other. As a result, members that could obstruct gas discharge can be eliminated from the region where the end faces of the battery holders 20 face each other, making it easier to define a gas discharge space 50.

As shown in FIG. 6, the lead connection piece 34 is formed by inwardly bending the upper end of the lead plate 30. Further, in the holder lid 24, a cut 28b is formed in a part of a lid flange 28 that constitutes the wall surface, so that the lead connection piece 34, which is a part of the lead plate 30, is exposed to the outside of the holder lid 24 with the lead plate 30 held inside the holder lid 24. The cut 28b also functions as a guide for positioning the lead plate 30 on the holder lid 24.

Further, the guide piece 22 is provided at a portion of the holder tube 21 corresponding to the cut 28b, which does not only serve to position the joint surface with respect to the holder lid 24, but also serves to suppress the outflow of high-temperature and high-pressure gas, which is ejected from the secondary battery cell in case of ignition, from the cut 28b to the outside of the battery holder 20.

### [Modification Example 1]

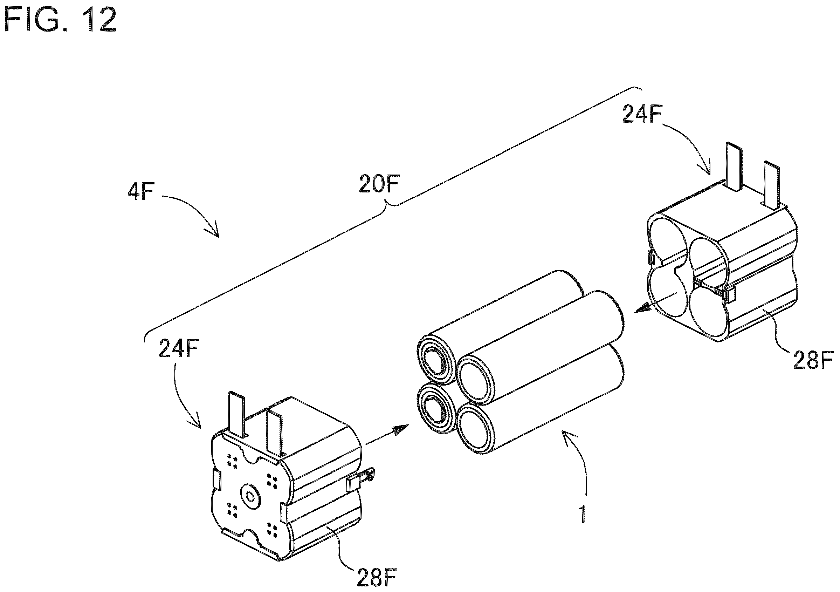

In the battery block 4 shown in FIGs. 3 to 6, etc., the example has been described in which the battery holder 20 is formed of three members, i.e., the holder tube 21 and a pair of holder lids 24. However, the present disclosure is not limited to this configuration, and the number of members constituting the battery holder may be two or less, or four or more. For example, in a battery block 4F according to Modification Example 1 shown in FIG. 12, a battery holder 20F is formed of a pair of holder lids 24F. The pair of the holder lids 24F have extended lid flanges 28F, eliminating the need for a holder tube.

### (Gas Discharge Space 50)

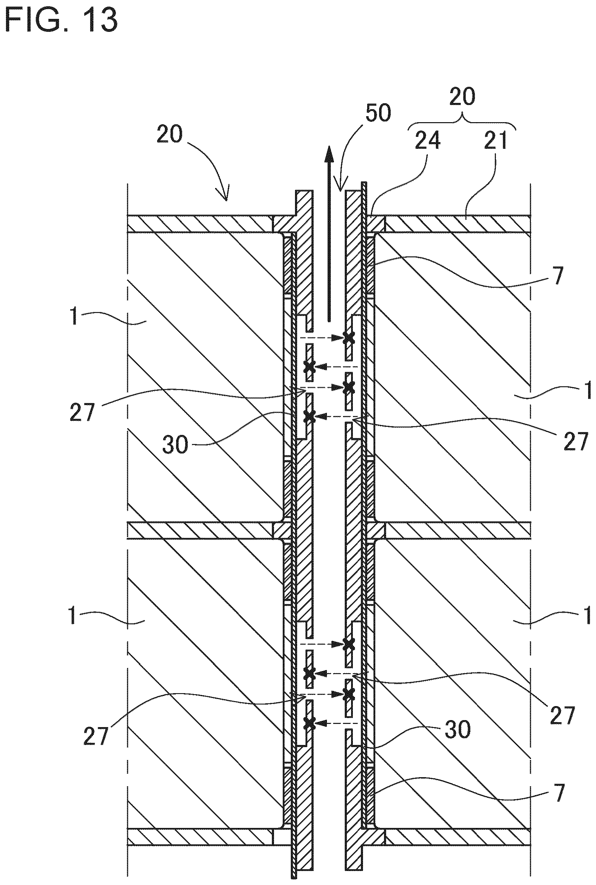

As shown in FIGs. 11 and 13, the battery module 2 defines the gas discharge space 50 in the space where the end faces of adjacent battery holders 20 face each other. The cross-sectional view of FIG. 13 shows the region surrounded by the dashed line in FIG. 11. If an abnormality occurs in any of the secondary battery cells 1 and high-temperature and high-pressure gas or flames upon ignition of the gas are released, it is necessary to avoid propagation of fire caused by heating of other adjacent secondary battery cells 1. Therefore, the gas released from the gas discharge port of the secondary battery cell 1 is guided to the gas discharge space 50 and released to the outside of the battery pack.

As described above, each secondary battery cell is provided with a gas discharge port that opens if an abnormality occurs and the internal pressure increases, in order to release the internal gas. Such a gas discharge port is generally provided on the end face at the positive electrode side of the secondary battery cell. Meanwhile, in a battery pack that stores a large number of secondary battery cells, the volume of internal space is limited. Therefore, the secondary battery cells are required to be disposed in close proximity to each other.

Accordingly, as shown in the perspective view of FIG. 14 and the cross-sectional view of FIG. 15, which illustrate a battery pack 800 according to Comparative Example 3, the fire-resistant wall 808 is disposed at the interface between battery holders 820 where the end faces of the secondary battery cells 801 are facing each other. On both sides of the fire-resistant wall 808, the discharge ducts 850 are defined to guide high-temperature and high-pressure gases to the outside in case where high-temperature and high-pressure gas is accidentally released from the secondary battery cells 801, which are facing each other.

However, in such a configuration, it has been necessary to form two discharge ducts 850 between the secondary battery cells 801. As the number of secondary battery cells increases, the length of the battery pack also increases accordingly, resulting in a larger overall size. However, if the height of the discharge duct 850 is reduced, in case of accidental discharge of high-temperature and high-pressure gas, the ability to discharge the high-temperature and high-pressure gas to the outside of the battery pack may decrease, raising concerns about reduced safety. Thus, ensuring safety and achieving a smaller or thinner battery pack are conflicting requirements, and it has been difficult to achieve both.

In contrast, in the battery pack 100 according to the present embodiment, as shown in the cross-sectional view in FIG. 13, the size of the battery pack is reduced by sharing the gas discharge space 50 between the end faces of adjacent battery holders 20. Further, as shown in FIG. 15, the fire-resistant wall 808, which was necessary to divide the gas discharge space 50, is eliminated, thereby reducing the number of components and also achieving cost reduction.

On the other hand, in order to enhance safety, the holder lid 24 is provided with a function equivalent to that of a fire-resistant wall. That is, by enhancing the heat resistance of the holder lid 24, even if high-temperature and high-pressure gas is ejected from secondary battery cells which are facing each other, it is possible to suppress propagation of the gas to other secondary battery cells. Further, instead of making the entire battery holder 20 from a highly heat-resistant material, only the portion likely to be exposed to high-temperature and high-pressure gas, which is the holder lid 24, is made of a highly heat-resistant member, thereby contributing to suppressing an increase in the cost of the battery holder 20.

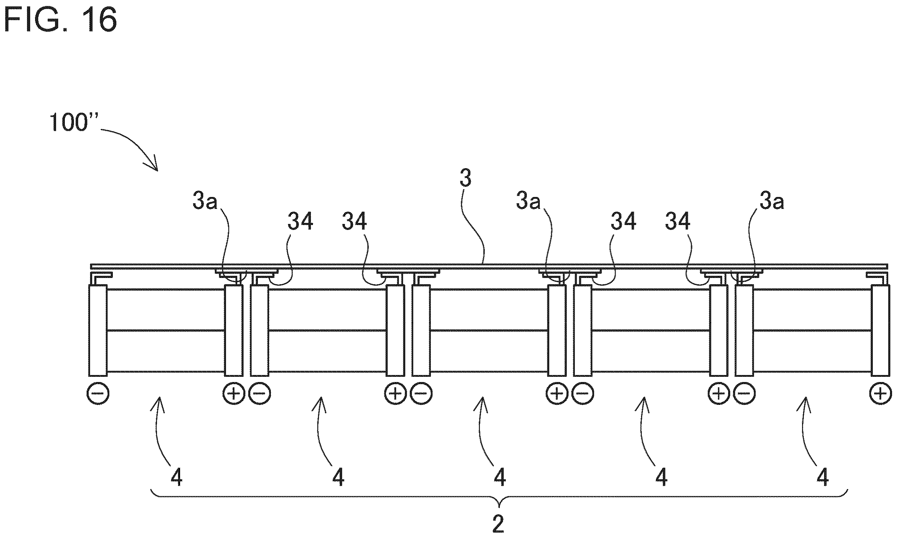

In the battery packs of FIG. 1, etc., five battery blocks are linearly connected. Except for the rightmost battery block of FIG. 11, as shown in FIG. 4, each battery block includes four secondary battery cells. Of these, the two secondary battery cells on the near side in the figure are stacked such that the negative electrodes face the left side and the positive electrodes face the right side, while the two secondary battery cells on the far side are stacked such that the positive electrodes face the left side and the negative electrodes face the right side. On the other hand, in the rightmost battery block, conversely to the configuration of FIG. 4, the two secondary battery cells on the near side are stacked such that the positive electrodes face the left side and the negative electrodes face the right side, while the two secondary battery cells on the far side are stacked such that the negative electrodes face the left side and the positive electrodes face the right side. FIG. 11 illustrates the electrodes of the secondary battery cells on the near side in the figure. For example, as in the battery pack 100" according to Modification Example 2 shown in FIG. 16, it is possible to adopt a configuration in which the secondary battery cells are disposed such that a positive electrode and a negative electrode face each other at the interface with another adjacent battery block. However, in other battery packs, as shown in FIG. 11, the positive electrodes of the secondary battery cells may be disposed to face each other in at least one or all of the interfaces between adjacent battery blocks. For example, in a configuration in which the gas discharge port is provided on the positive electrode side of the secondary battery cell, it is possible to adopt a configuration in which the negative electrodes of the secondary battery cells are made to be disposed on both sides of the battery pack so that, even if high-temperature and high-pressure gas is discharged from either of the secondary battery cells disposed on both sides, the gas can be prevented from being released directly from the battery pack. In such a configuration, as shown in FIGs. 11 and 13, more portions where the faces provided with gas discharge ports, such as the positive electrode sides, face each other are likely to exist. Even in such a configuration, it is possible to reduce the size of the battery pack by sharing the gas discharge space 50, as described above.

### (Through-Port 27)

Further, the holder lid 24 has a plurality of through-ports 27, which are opened on the surface facing the holder lid 24 of another adjacent battery holder 20. The through-ports 27 are opened to weld the lead plate 30 to the end faces of the secondary battery cells 1. This makes it possible to dispose the lead plate 30 on the inner face of the holder lid 24 and weld the secondary battery cell 1 to the lead plate 30 by inserting an electrode rod or the like through the through-ports 27 opened in the holder lid 24. In other words, the through-ports 27 are opened at positions where the lead plate 30 is welded to the end faces of the secondary battery cells 1. In the examples of FIG. 3, etc., four through-ports 27 are opened in a 2×2 matrix arrangement in each lid region 26 of the holder lid 24. The number and positions of the through-ports 27 are not limited to this example, and the through-ports 27 may be opened according to the positions and number of welding sites of the lead plate 30. The welding of the lead plate 30 can be performed by operations such as inserting a jig like a push rod through the through-port 27 to press the lead plate 30 against the end faces of the secondary battery cells 1, performing welding by inserting a welding rod, irradiating a laser beam through the through-ports 27 to weld the lead plate 30, or the like. Therefore, the size, position, and number of the through-ports 27 are determined according to the required welding strength and the welding method adopted.

It is preferable to reduce the size and number of the through-ports 27 to the minimum necessary for enabling welding. This is because, as shown in FIG. 13, etc., in case where gas or the like is accidentally released from the secondary battery cell 1, it is necessary to avoid an event that the gas or the like is leaked through the through-ports 27. Preferably, each through-port 27 has a size of not more than φ4 mm.

Further, the through-port 27 may be closed after the lead plate 30 is welded. In this case, a single, relatively large through-port may be formed and closed after welding, thereby improving workability. For example, a configuration in which a cap is fitted into the through-port can be used.

Further, it is preferable that the through-ports 27 are opened at positions offset from each other on the opposing surfaces of the adjacent holder lids 24. With this configuration, as shown in FIG. 13, even if high-temperature and high-pressure gas is ejected from one of the secondary battery cells 1 having opposing end faces, the through-ports 27 of the opposing holder lids 24 are not in communication with each other, thereby preventing the high-temperature and high-pressure gas from being directly emitted onto the end face of the adjacent secondary battery cell 1 through the through-ports 27.

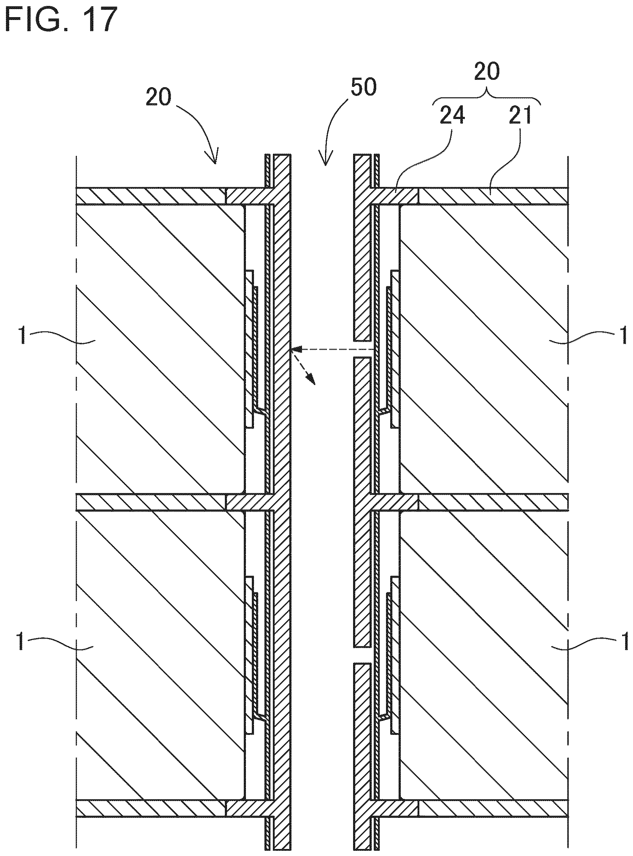

Note that, in case where the gas is accidentally released, the gas may break through the resin-made holder lid 24 by its high temperature and high pressure regardless of the presence or absence of the through-ports 27. Even in such a case, two holder lids 24 are present between the end faces of the adjacent secondary battery cells 1. As a result, as shown in the cross-sectional view of FIG. 17, when the secondary battery cell 1 on the right side catches fire, the high-temperature and high-pressure gas directly hits and ruptures the right-side holder lid 24. However, even if the gas passes through this point, the rupture causes the gas to lose energy and temperature, so that it does not pass through the left-side holder lid 24, thereby protecting the secondary battery cell 1 on the left side. In other words, insofar as the strength and heat resistance of the holder lids 24 are designed to block the passage of gas between the two holder lids 24 which are spaced apart, it is possible to prevent the passage of gas therebetween. This eliminates the need to impose excessive specifications on the resin used to form the holder lids 24, thereby reducing costs. In addition, the thickness of the holder lids 24, which affects the strength such as impact resistance, can also be designed in consideration of the protection with the two holder lids 24 that are spaced apart. In this regard as well, the thickness can be reduced, contributing to the miniaturization of the battery pack.

### (Closing Unit 40)

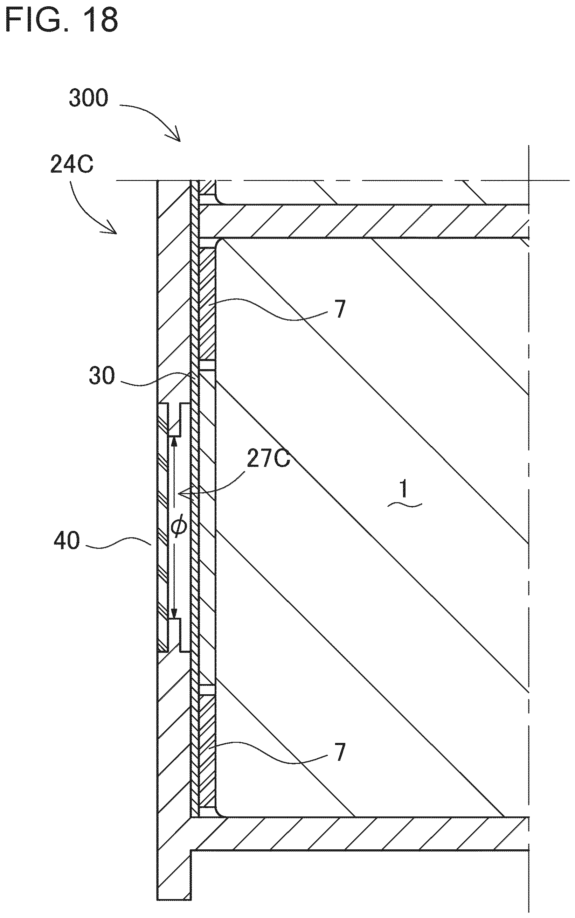

Further, the through-ports may be closed after the welding of the lead plate is completed. Such an example is shown in the schematic cross-sectional view of FIG. 18 as a battery pack 300 according to Modification Example 3. Again, in this drawing, the same members as those described above in Embodiment 1, etc. are given the same reference numbers, and detailed descriptions are omitted as appropriate. The battery pack 300 of FIG. 18 includes a closing unit 40 that closes the through-port 27C. In this way, since the through-port 27C can be closed with the closing unit 40 after completing necessary processes such as welding, it is possible to form the through-port 27C or an opening window with a relatively large opening diameter φ, thereby improving the workability of welding and other operations through the through-ports 27C, etc.

The closing unit 40 can be formed into a plate shape. For example, a disk-shaped plate material or a rectangular plate material can be used. It is preferable that such plate materials be made of a heat-resistant material, as in the materials of a holder lid 24C or the like. For example, the plate materials may be made of unsaturated polyester, unsaturated phenolic resin, glass epoxy resin, silicone resin, mica, ceramic, a mixed material of these powder resins, or a metal plate with insulation treatment. Further, the closing unit 40 may be made of a material different from that of the holder lid 24C.

Alternatively, the closing unit 40 may be formed into a shape that is easily crushed upon receiving the gas released from the gas discharge port. This makes it possible to avoid such an event that, when the closing unit is ruptured by the gas, the closing unit gets caught in the gas discharge space and blocks the gas discharge path, causing a rise in pressure. Examples of the shapes that allow the closing unit to more easily break include any known shapes or structures that promote rupture or crushing of the closing unit into small pieces, and such shapes may be appropriately employed, for example, by forming a lattice-shaped grooves in the closing unit.

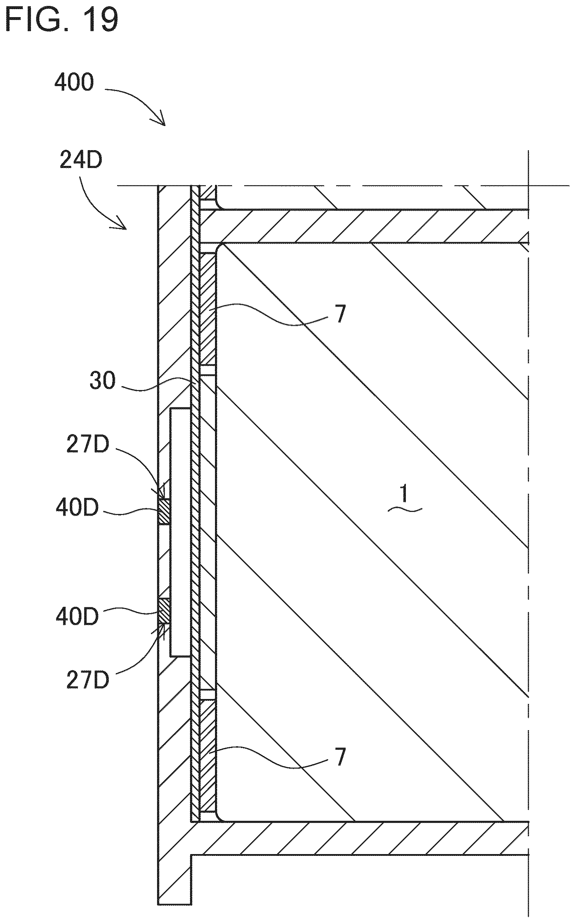

Alternatively, the closing unit may be formed from an adhesive material, resin material, or sealant. In particular, for through-ports with a small diameter, the closing unit may be formed by filling the through-ports with an uncured resin or the like and then curing the resin. The schematic cross-sectional view of FIG. 19 illustrates such an example as a battery pack 400 according to Modification Example 4. In this example, each of a plurality of through-ports 27D is filled with a resin material to form a closing unit 40D. In this configuration, even with the closing units 40 provided on the holder lid 24D, it is possible to avoid an increase in thickness of the holder lid 24D and to prevent the cross-sectional area of the gas discharge space from decreasing.

### (Lid Flange 28)

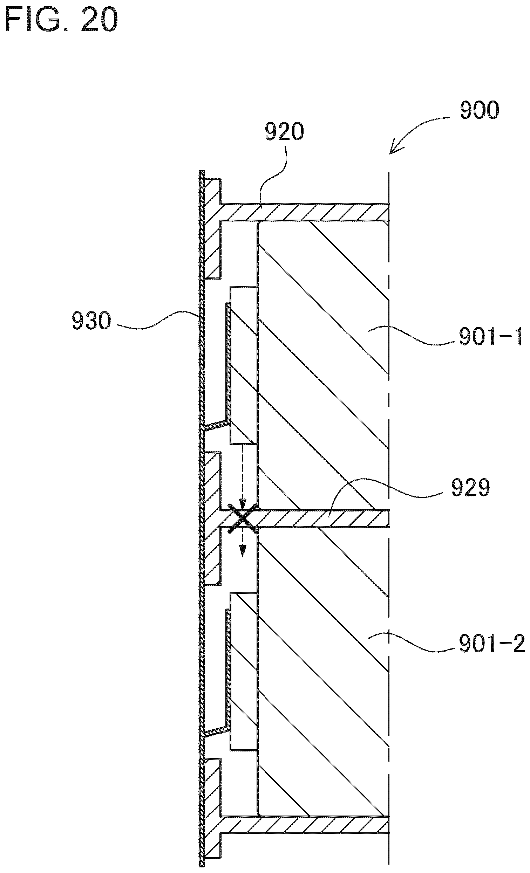

Further, it is preferable that the holder lid 24 include a lid flange 28 around its inner face. With such a configuration, even if high-temperature and high-pressure gas is accidentally ejected from an end face of the secondary battery cell, the lid flange 28 of the holder lid 24 having flame resistance can prevent the spread of fire in the lateral direction. As in a battery pack 900 of Comparative Example 4 shown in FIG. 20, it has been found through experiments that, when high-temperature and high-pressure gas is ejected from a secondary battery cell 901-1, the side face of a battery holder 920 is likely to rupture. In particular, the gas tends to concentrate at ridge-like or corner portions such as the boundary between the end face and the side face of the battery holder 920, making these areas more prone to rupture. In particular, as shown in FIG. 20, if a compartment wall 929 that separates the cell side face 1c of the secondary battery cell 901-1 from another adjacent secondary battery cell 901-2 is melted and fused, the adjacent secondary battery cell 901-2 may be directly heated, posing a risk of thermal propagation.

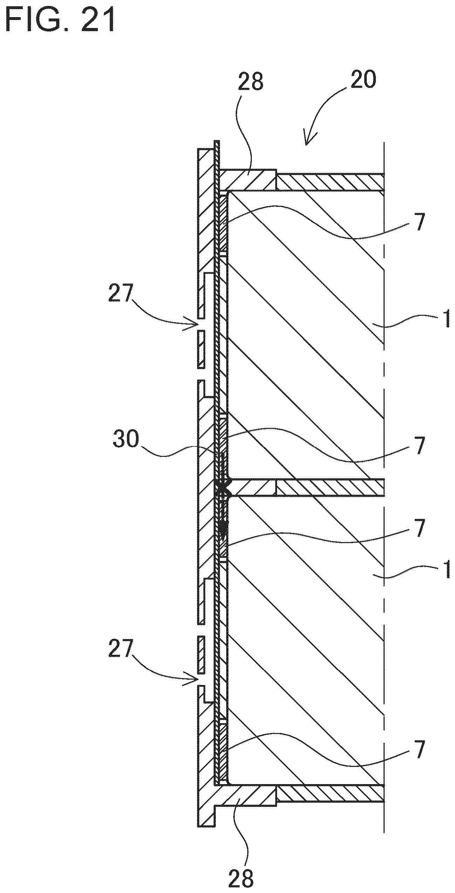

Therefore, in the battery pack 100 according to the present embodiment, as shown in the schematic cross-sectional view of FIG. 21, the lid flange 28 extends inwardly from the periphery of the holder lid 24. By forming the lid flange 28 in this manner, it is possible to provide a highly heat-resistant region also on the side face of the battery holder 20, thereby effectively reducing the risk of rupture occurring in this part. As shown in FIG. 6, the height D1 of the lid flange 28 is greater than the thickness of the insulation ring 7 and extends toward the center in the longitudinal direction beyond the end face of the main body of the secondary battery cell 1. Preferably, the height D1 is not less than 1 mm, more preferably from 2 mm to 10 mm, and further more preferably about 6 mm.

The lid flange 28 constitutes the wall surface of the holder lid 24, as shown in FIGs. 4, 6, etc. The holder lid 24 having the lid flange 28 covers a part of the end face of the secondary battery cell 1. The lid flange 28 is preferably formed integrally with the holder lid 24. In the examples of FIG. 5, etc., the lid flange 28 is formed in a wall-like shape covering the outer periphery of the holder lid 24. Note that, the cut 28b is formed in a part of the lid flange 28 to allow the lead connection piece 34 of the lead plate 30 to be exposed from the holder lid 24. The circuit board 3 is positioned on the side where the cut 28b is provided; in other words, there is no adjacent secondary battery cell on that side. Therefore, the risk of thermal propagation to another secondary battery cell can be avoided.

### (Partition Plate 29)

On the other hand, as shown in FIG. 6, etc., a partition plate 29 is provided on the inner face of the holder lid 24 on the side of the second cell end face 1b of the secondary battery cell 1 with a gas discharge port. The partition plate 29 is formed on the surface where the cell side faces 1c are facing each other. As in the lid flange 28, the height of the partition plate 29 is greater than the thickness of the insulation ring 7, allowing it to protrude toward the center in the longitudinal direction beyond the end face of the main body of the secondary battery cell 1. By providing the partition plate 29, even if the above-described high-temperature and high-pressure gas rebounds at the end face of the holder lid 24 and scatters around, the partition plate 29 can prevent the gas from adversely affecting the adjacent secondary battery cells. Here, in a configuration in which the lead plate 730 is disposed outside the holder lid 724, such as the battery pack 700 according to Comparative Example 1 shown in FIG. 7, there is no particular issue in providing a partition plate 729 inside the holder lid 724.

On the other hand, in a structure in which the lead plate 30 is disposed inside the holder lid 24, such as the battery pack 100 according to Embodiment 1, it is necessary to connect the end faces of adjacent secondary battery cells 1. Therefore, since the lead plate 30 needs to be inserted between the end faces of the secondary battery cells 1, the partition plate cannot be disposed in this portion. However, this configuration cannot provide protection as described above in the event that high-temperature and high-pressure gas is discharged, in particular, when the positive electrodes are connected to each other. Therefore, in the present embodiment, the lead plate 30 is shaped in a particular way.

### (First Lead Plate 30A)

The first lead plate 30A shown in FIG. 6 connects the end faces of a first battery cell 1-1 located at the upper right in the figure and a second battery cell 1-2 located at the lower right in the figure. Since the end faces of both the first battery cell 1-1 and the second battery cell 1-2 have positive electrodes, it is necessary to take countermeasures in case where a gas discharge port is opened. On the other hand, since the second lead plate 30B connects the negative electrodes of the first battery cell 1-1 and the second battery cell 1-2, no gas discharge port is present, and therefore no specific countermeasures are necessary.

As a specific countermeasure, the partition plate 29 is provided in the holder lid 24 between a first lid region 26-1, which faces the end face of the first battery cell 1-1, and a second lid region 26-2, which faces the end face of the second battery cell 1-2. This configuration allows the partition plate 29 to prevent adverse effects on the other secondary battery cell in the event that a gas discharge port is opened either in the first battery cell 1-1 or the second battery cell 1-2.

On the other hand, the first lead connection part 33A of the first lead plate 30A is extended in a mountain shape along the partition plate 29. With this configuration, even with the partition plate 29 formed between the end faces of the secondary battery cells 1, electric connection between these end faces can be established by the lead plate 30. In addition, since the lead plate 30, which is made of metal, is placed over the partition plate 29, it also reinforces the partition plate 29. Therefore, enhanced protection for the region from the end face to the side face of the secondary battery cell 1 and improved safety can be expected.

### [Embodiment 2]

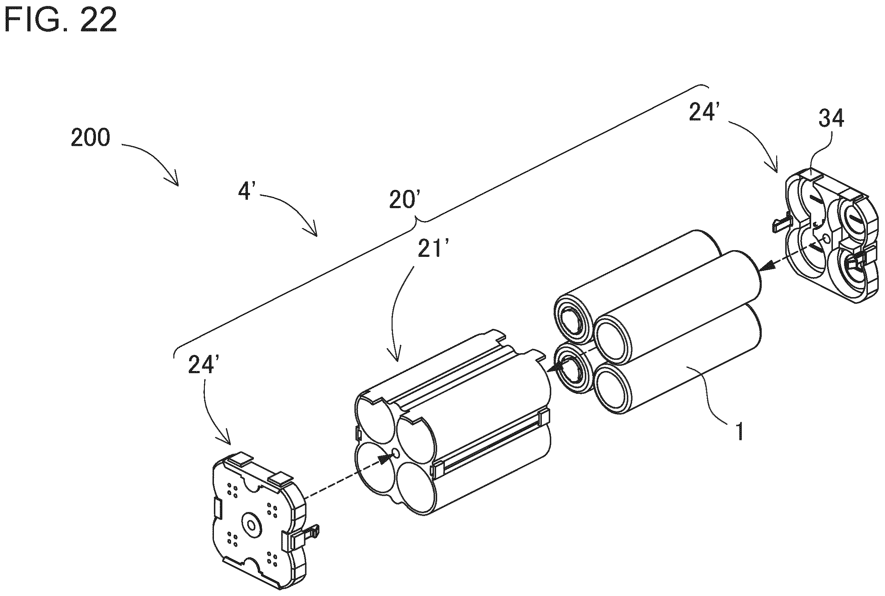

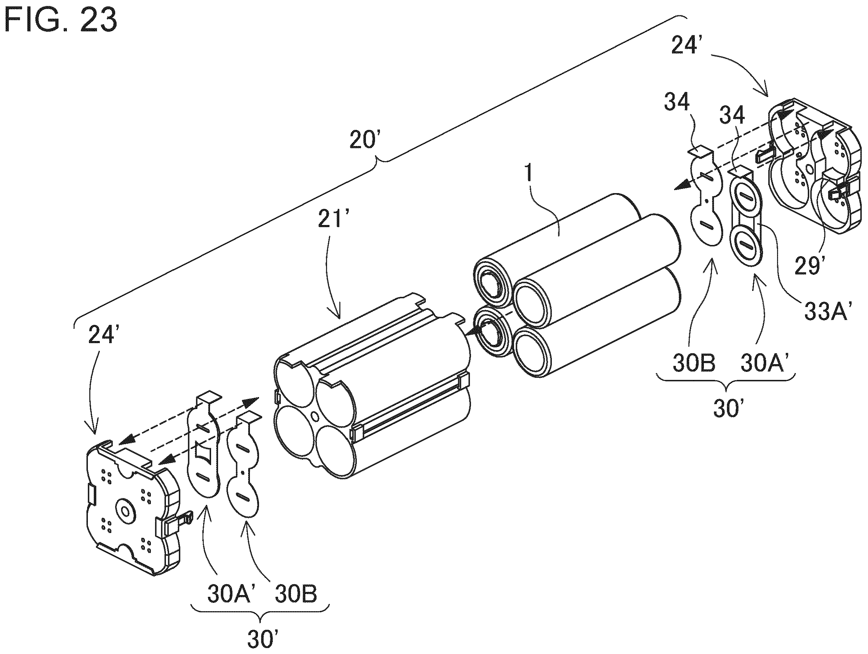

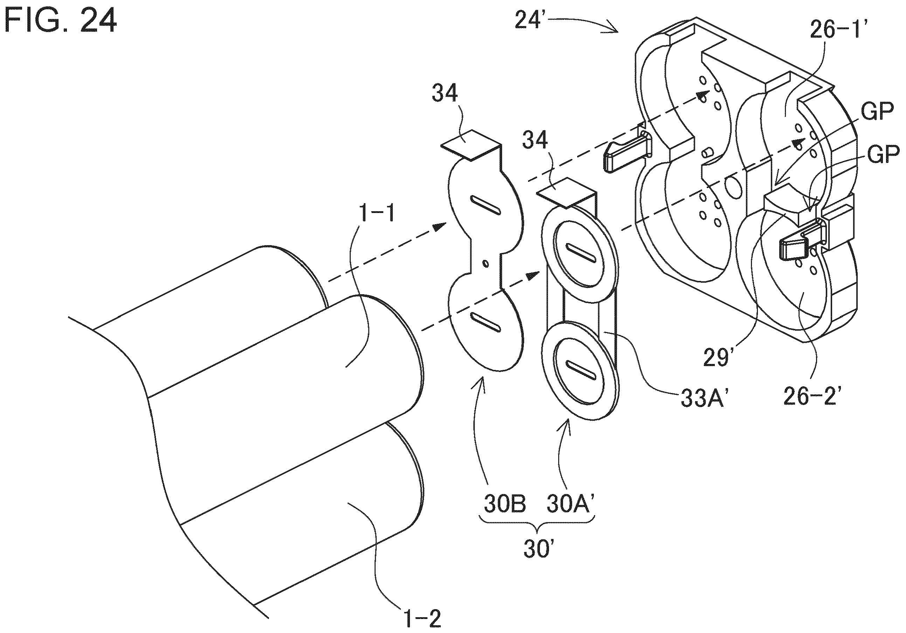

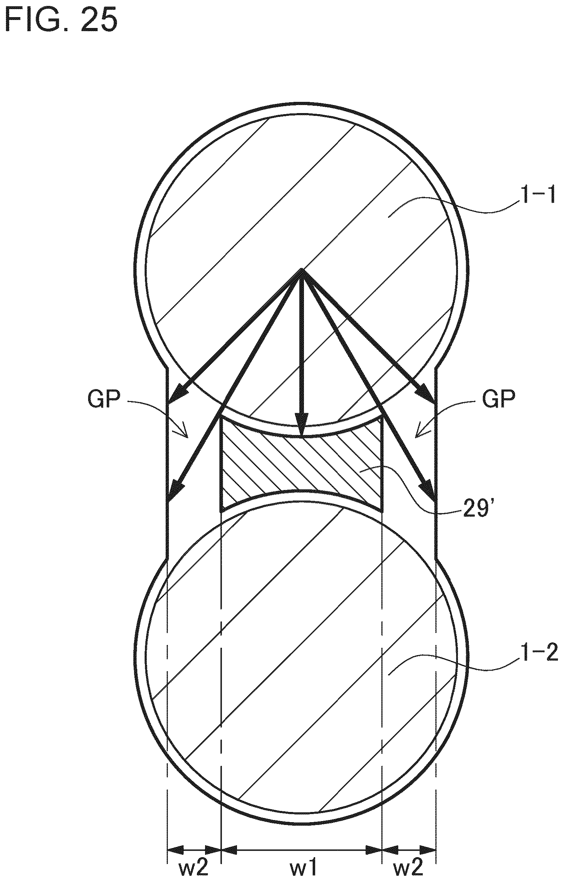

In the above examples, a configuration was described in which the lead plate 30 extends to pass over the partition plate 29. However, the present disclosure is not limited to this configuration, and the lead plate may also be configured to bypass the partition plate. Such an example is shown in FIGs. 22 to 25 as a battery block 4' of a battery pack 200 according to Embodiment 2. In these drawings, FIG. 22 is an exploded perspective view of the battery block 4' of the battery pack 200 according to Embodiment 2; FIG. 23 is an exploded perspective view of a state in which the lead plates 30 are detached from the holder lids 24' of FIG. 22; FIG. 24 is an enlarged perspective view of the holder lid 24' and the lead plates 30 of FIG. 23; and FIG. 25 is a schematic diagram showing paths of gas released in the holder lid of FIG. 24. In these drawings, the same members as those according to Embodiment 1 described above are given the same reference numbers, and detailed descriptions are omitted as appropriate.

As shown in FIGs. 22 and 23, the battery block 4' of the battery pack 200 according to Embodiment 2 also includes a battery holder 20', the secondary battery cells 1, and lead plates 30'. The battery holder 20' includes a holder tube 21' and a pair of holder lids 24'. Each of the holder lids 24' holds a first lead plate 30A' and a second lead plate 30B on its inner face. As shown in the enlarged perspective view of FIG. 24, a partition plate 29' is formed between the first battery cell 1-1 and the second battery cell 1-2, which are connected by the first lead plate 30A'. This partition plate 29' does not completely separate a first lid region 26-1' and a second lid region 26-2'; instead, a gap GP is provided on the left and right sides of the partition plate 29' to allow communication between the first lid region 26-1' and the second lid region 26-2'. Further, a first lead connection part 33A' of the first lead plate 30A' is provided at a position offset from the line connecting the centers of the first lead connection face and the second lead connection face. With this configuration, even if high-temperature and high-pressure gas is released from the end face of either the first battery cell 1-1 or the second battery cell 1-2, the partition plate 29' is provided on the line connecting the centers of the end faces, which is the shortest path for the gas to reach the other end face, thereby preventing direct impact of the gas. Meanwhile, the lead connection part is provided at a position offset from this line connecting the centers of the end faces, thereby maintaining electrical connection between the first lead connection face and the second lead connection face.

Further, a plurality of lead connection parts may be provided at positions offset from the line connecting the centers of the end faces. In the example of FIG. 24, the first lead connection part 33A' is branched to pass through the left and right gaps GP of the partition plate 29'. With this configuration, the first lead connection parts 33A' are bypassed on the left and right sides of the partition plate 29', allowing it to connect to the end faces of the secondary battery cells on the back side of the partition plate 29'. Further, by providing the two first lead connection parts 33A' branched to the left and right, the connection area can be increased and the electrical resistance can be reduced. In particular, compared to the first lead plate 30A according to Embodiment 1, the first lead connection part 33A' can be shortened and can be formed without bent portions, thereby simplifying the structure and reducing costs. Moreover, shortening the first lead plate 30A' also contributes to reducing electrical resistance. In addition, the portions where the gaps GP are formed on the left and right sides of the partition plate 29' are described below with reference to FIG. 25. In the event of thermal propagation, it is important, as described above, to prevent high-temperature and high-pressure gas from being directly blown onto an adjacent secondary battery cell. With the provision of the partition plate 29' as well as the presence of the lid flange surface that forms the gaps GP connecting the first lid region 26-1 and the second lid region 26-2 on the left and right sides of the partition plate 29', it is possible to reduce the event that high-temperature and high-pressure gas is directly blown onto an adjacent secondary battery cell. Preferably, as shown in FIG. 25, a width w1 of the partition plate 29' is made larger, and a width w2 of each gap GP for communication is made narrower.

Note that, in the examples of FIG. 4, etc., both sides of the holder tube 21 are closed by the respective holder lids 24; however, the present disclosure is not limited to this configuration. For example, the holder tube may be formed as a bottomed tubular shape with one end of the tube closed, and only the other open end may be closed with a single holder lid. For example, in the case of a battery holder that stores only one secondary battery cell, it is sufficient that only the end face of the secondary battery cell where the gas discharge port is provided, for example, the positive electrode side, is closed with a holder lid having enhanced heat resistance. Further, even for a battery holder storing a plurality of secondary battery cells, by aligning the end faces of the stacked secondary battery cells such that the sides with the gas discharge ports are flush with each other, it is sufficient to cover only the end faces where the gas discharge ports are provided with the holder lid in the same manner, thus reducing the amount of expensive resin materials with enhanced heat resistance and reducing costs. In other words, by adopting a configuration such as that shown in FIG. 4, etc., in which end faces on both sides of the holder tube 21 are covered respectively with the holder lids 24, each end face with a gas discharge port can be covered with the holder lid 24 with enhanced heat resistance regardless of the orientation or the direction of the secondary battery cells, thereby enhancing safety. The example in FIG. 13 illustrates a case where the both end faces of the adjacent secondary battery cells 1 are the side where the gas discharge port is provided. In practice, it is not always necessary for the opposing end faces of the secondary battery cells to be the side with the gas discharge port (e.g., it is not always necessary to have an orientation with the positive electrodes facing each other).

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a housing of an electrical device. In the present disclosure, a battery pack simply refers to those in which, at least, secondary battery cells are stored in a case. Therefore, a configuration with built-in secondary battery cells for driving an electrical device stored in a housing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present invention can be suitably used as a battery pack for a mobile body, such as an electric assist bicycle or an electric cart. In addition, the battery pack according to the present invention can also be suitably used for applications including a power supply for portable electrical devices, such as electric cleaners and electric tools.

### REFERENCE SIGNS LIST

100, 100", 200, 300, 400 ... battery pack
1 ... secondary battery cell; 1a ... first cell end face; 1b ... second cell end face; 1c ... cell side face
1-1 ... first battery cell; 1-2 ... second battery cell
2 ... battery module
3 ... circuit board; 3a ... connection region
4, 4', 4F ... battery block
5 ... connection port
6 ... shaft
7 ... insulation ring
10 ... housing
20, 20', 20F ... battery holder
21, 21' ... holder tube
22 ... guide piece
23 ... holder receiver
24, 24', 24C, 24D, 24F ... holder lid
24e ... thin-walled region
25 ... holder claw
26 ... lid region; 26-1 ... first lid region; 26-2 ... second lid region
27, 27C, 27D ... through-port
28, 28F ... lid flange; 28b ... cut
29, 29' ... partition plate
30, 30' ... lead plate; 30A, 30A' ... first lead plate; 30B ... second lead plate
31 ... lead connection face; 31A... first lead connection face
32 ... lead connection face; 32A ... second lead connection face
33 ... lead connection part; 33A, 33A' ... first lead connection part; 33B ... second lead connection part
34 ... lead connection piece
40, 40D ... closing unit
50 ... gas discharge space
700 ... battery pack
701 ... secondary battery cell
707 ... insulation paper
720 ... battery holder
721 ... holder tube
724 ... holder lid
729 ... partition plate
730 ... lead plate
800 ... battery pack
801 ... secondary battery cell
808 ... fire-resistant wall
820 ... battery holder
850 ... discharge duct
900 ... battery pack
901, 901-1, 901-2 ... secondary battery cell
920 ... battery holder
929 ... compartment wall
924 ... holder lid
930 ... lead plate
d1 ... thickness of holder lid; d2 ... thickness of thin-walled region; d3 ... gap
d9 ... distance between holder lid and secondary battery cell
D1 ... height of lid flange
φ ... opening diameter of through-port
GP ... gap
w1 ... width of partition plate
w2 ... width of gap for communication

## Claims

1. A battery pack comprising:
a plurality of secondary battery cells, each of which has, at an end face, a gas discharge port that opens in response to an increase in internal pressure;
a plurality of lead plates, each of which connects the plurality of secondary battery cells; and
a plurality of battery holders, each of which stores the plurality of secondary battery cells and the lead plates,
wherein
the plurality of battery holders are coupled in such an orientation that end faces of adjacent battery holders face each other to form a battery module,
a gas discharge space is defined between the end faces, which face each other, of the battery holders,
each of the battery holders comprises:
a holder tube that stores the secondary battery cells, and
at least one holder lid that closes an end of the holder tube, and
the lead plates are disposed on an inner face of the holder lid.

2. The battery pack as recited in claim 1, wherein
the holder lid is made of a material having higher heat resistance than heat resistance of the holder tube.

3. A battery pack, comprising:
a plurality of secondary battery cells, each of which has, at an end face, a gas discharge port that opens in response to an increase in internal pressure;
a plurality of lead plates, each of which connects the plurality of secondary battery cells; and
a plurality of battery holders, each of which stores the plurality of secondary battery cells and the lead plates,
wherein
the plurality of battery holders are coupled in such an orientation that end faces of adjacent battery holders face each other to form a battery module,
a gas discharge space is defined between the end faces, which face each other, of the battery holders,
each of the battery holders comprises:
a holder tube that stores the secondary battery cells, and
at least one holder lid that closes an end of the holder tube, and
the holder lid is made of a material having higher heat resistance than heat resistance of the holder tube.

4. The battery pack as recited in claim 3, wherein
the lead plates are disposed on an inner face of the holder lid.

5. The battery pack as recited in any one of claims 1 to 4, wherein
the holder tube holds the secondary battery cells so that one secondary battery cell is held in the longitudinal direction.

6. The battery pack as recited in any one of claims 1 to 4, wherein
the battery holder does not have an additional lead plate for electrical connection with another adjacent battery holder between the battery holder and the another adjacent battery holder.

7. The battery pack as recited in any one of claims 1 to 4, wherein
the holder lid comprises a thin-walled region that is partially thinned on a surface facing a holder lid of another adjacent battery holder.

8. The battery pack as recited in claim 7, wherein
the holder lid has an outer face that is a continuous flat plane, and
an inner face, which faces end faces of the secondary battery cells, of the holder lid is partially recessed to form the thin-walled region.

9. The battery pack as recited in any one of claims 1 to 4, wherein
the holder lid comprises a lid flange around the inner face.

10. The battery pack as recited in claim 9, wherein
the lid flange has a height of not less than 1 mm.

11. The battery pack as recited in any one of claims 1 to 4, wherein
the holder lid comprises a plurality of through-ports on a surface facing a holder lid of another adjacent battery holder.

12. The battery pack as recited in claim 11, wherein
the respective through-ports in the holder lid are formed at positions offset from each other on the surface facing a holder lid of another adjacent battery holder.

13. The battery pack as recited in claim 11, wherein
the through-ports have a size of not more than φ4 mm.

14. The battery pack as recited in claim 11, further comprising
a closing unit that closes the through-ports.

15. The battery pack as recited in claim 14, wherein
the closing unit has a shape that is easily crushed upon receiving gas released from the gas discharge port.

16. The battery pack as recited in claim 15, wherein
the closing unit comprises a lattice-shaped groove.

17. The battery pack as recited in any one of claims 1 to 4, wherein
the holder tube is made of a thermoplastic resin, and
the holder lid is made of a thermosetting resin.

18. The battery pack as recited in any one of claims 1 to 4, wherein
the holder tube is made of at least one of polycarbonate, polypropylene, polybutylene terephthalate, modified polyphenylene ether, ABS, and PPS, and
the holder lid is made of at least one of unsaturated polyester, unsaturated phenolic resin, glass epoxy resin, silicone resin, mica, ceramic, a mixed material of these powder resins, or a metal plate with insulation treatment.

19. The battery pack as recited in any one of claims 1 to 4, further comprising:
a circuit board connected to the battery module,
wherein
each of the lead plates includes a lead connection piece at an edge, and
the battery module is configured such that the lead connection piece of each of the lead plates fixed to an end face of each of the battery holders is exposed from one surface of the battery module and connected to the circuit board.

20. The battery pack as recited in any one of claims 1 to 4, wherein
each of the battery holders holds, among the plurality of secondary battery cells, a first battery cell and a second battery cell in parallel with each other in an orientation such that end faces of the first battery cell and the second battery cell are flush with each other,
each of the lead plates disposed on an inner face of the holder lid connects the end faces of the first battery cell and the second battery cell,
each of the lead plates comprises:
a first lead connection face connected to the end face of the first battery cell;
a second lead connection face connected to the end face of the second battery cell; and
a first lead connection part that connects the first lead connection face and the second lead connection face,
the holder lid comprises:
a first lid region that faces the end face of the first battery cell;
a second lid region that faces the end face of the second battery cell; and
a partition plate provided between the first lid region and the second lid region, and
the first lead connection part extends in a mountain shape along the partition plate.

21. The battery pack as recited in any one of claims 1 to 4, wherein
each of the battery holders holds, among the plurality of secondary battery cells, a first battery cell and a second battery cell in parallel with each other in an orientation such that end faces of the first battery cell and the second battery cell are flush with each other,
each of the lead plates disposed on an inner face of the holder lid connects the end faces of the first battery cell and the second battery cell,
each of the lead plates comprises:
a first lead connection face connected to the end face of the first battery cell;
a second lead connection face connected to the end face of the second battery cell; and
a first lead connection part that connects the first lead connection face and the second lead connection face,
the holder lid comprises:
a first lid region that faces the end face of the first battery cell;
a second lid region that faces the end face of the second battery cell; and
a partition plate provided between the first lid region and the second lid region, and
the first lead connection part is provided at a position offset from a line connecting centers of the first lead connection face and the second lead connection face.

22. The battery pack as recited in claim 20 or 21, wherein
the first lead connection part is branched into the left and right of the partition plate.

23. A method for manufacturing a battery pack,
the battery pack comprising:
a plurality of secondary battery cells, each of which has, at an end face, a gas discharge port that opens in response to an increase in internal pressure;
a plurality of lead plates, each of which connects the plurality of secondary battery cells; and
a plurality of battery holders, each of which stores the plurality of secondary battery cells and the lead plates,
the method comprising:
a step of disposing each of the lead plates on an inner face of a holder lid, which is configured to close an end of a holder tube of each of the battery holders and is made of a material having higher heat resistance than heat resistance of the holder tube;
a step of storing the secondary battery cells in the holder tube in which each of the lead plates is disposed in such a manner that end faces of the secondary battery cells are mated with the holder lid;
a step of welding each of the lead plates to the end faces of the secondary battery cells via through-ports opened in the holder tube;
a step of closing the through-ports with a closing unit; and
a step of coupling the plurality of battery holders in an orientation such that end faces of adjacent battery holders face each other to form a battery module, and defining a gas discharge space between the end faces, which face each other, of the battery holders.
